# EUROPÄISCHE PATENTSCHRIFT

(11) **EP 0 874 709 B1**
(45) Veröffentlichungstag und Bekanntmachung des Hinweises auf die Patenterteilung: **25.08.1999**
(21) Anmeldenummer: 97915258.4
(22) Anmeldetag: 17.01.1997
(51) Int. Cl.: B23D 31/00, B30B 9/32

(54) **ANORDNUNG EINER SCHROTTSCHERE FÜR DEREN TRANSPORT, MONTAGE UND DEMONTAGE SOWIE VERFAHREN ZUR MONTAGE DER ANORDNUNG**
ARRANGEMENT OF A SCRAP CUTTER FOR THE TRANSPORTATION, ASSEMBLY AND DISMANTLING THEREOF, AND METHOD OF ASSEMBLING SAID ARRANGEMENT
AGENCEMENT D'UNE CISAILLE A RIBLONS PERMETTANT DE LA TRANSPORTER, DE LA MONTER ET DE LA DEMONTER ET PROCEDE DE REALISATION DE CET AGENCEMENT

(30) Priorität: 19.01.1996 DE 19601735
(43) Veröffentlichungstag der Anmeldung: 04.11.1998
(73) Patentinhaber: Svedala Lindemann GmbH, 40231 Düsseldorf (DE)
(72) Erfinder: SCHAAF, Michael, D-42699 Solingen (DE); PÖHL, Peter, D-41569 Rommerskirchen (DE); KNUFMANN, Heinrich, D-41569 Rommerskirchen (DE)
(86) Internationale Anmeldenummer: DE9700077
(87) Internationale Veröffentlichungsnummer: WO9726104

(56) Entgegenhaltungen:
- FR-A- 1 466 946
- US-A- 3 610 136
- US-A- 4 782 748

## Beschreibung

### Technisches Gebiet

Die Erfindung betrifft eine mobile Schrottschere gemäß Oberbegriff von Patentanspruch 1 sowie ein Verfahren für deren Montage und Demontage, um die Schrottschere rationell zum jeweiligen Einsatzort verfahren und zum Schneiden von Schrott einsetzen zu können.

### Stand der Technik

Es sind mobile Schrottscheren bekannt, die sich grundsätzlich in zwei Bauarten unterscheiden:

Einerseits als eine z.B. auf einem Automobil wie LKW festmontierte und ständig für den Gebrauch einsatzbereite Funktionseinheit; andererseits als eine z.B. auf einer lafettenähnlichen Transporteinheit zusammengelegte Maschineneinheit, die am Einsatzort funktionsfähig zusammengesetzt wird. Bei der letztgenannten Bauart sind Schrottscheren bekannt geworden, deren Zusammenlegen im wesentlichen durch eine Verschwenkung des Scherenständers gegenüber dem Preßbett bzw. umgekehrt erfolgt.

Hierbei besteht das Problem, die Baugruppen dieser Art von Schrottscheren sowohl während des Transportes als auch während der eigentlichen Funktion ausreichend arretieren zu können.

### Darstellung der Erfindung

Die Erfindung stellt sich die Aufgabe, eine dieses Problem lösende mobile Schrottschere zu schaffen, wobei durch die Anordnung für deren Transport, bestehend aus mindestens zwei vormontierten Transporteinheiten, insgesamt umfassend die Baugruppen Grundrahmen mit Federelementen und Stützen, Scherenständer mit Messerschlitten, Preßbett mit Schieberzylinder und Schieberplatte, hydraulisches Antriebsaggregat nebst Zubehör, wie Hydraulikleitungen, Ölkühler und Schaltkasten, sowie durch ein Verfahren für die Montage und Demontage kurze Auf- und Abbauzeiten und die Verwendung von Serienkomponenten der zur Zeit im stationären Bereich arbeitenden Schrottscheren realisiert werden können.

Erfindungsgemäß wird dies dadurch gelöst, daß eine erste Transporteinheit den Grundrahmen für die Aufnahme von Baugruppen sowohl im Transport- als auch Arbeitszustand bildet, wobei während des Transportes der Scherenständer schwenkbar über einen Drehpunkt abgelegt ist, und die andere Transporteinheit durch das Preßbett gebildet ist, welches für den Transport Hilfsstützen aufweist. In den Ansprüchen 2 bis 13 ist die Erfindung weiter ausgeführt. Mit dieser mobilen Schrottschere läßt sich das im Anspruch 14 dargestellte Montageverfahren zeitsparend realisieren, wobei das Demontageverfahren folgerichtig in umgekehrter Weise durchzuführen ist, um die Schrottschere zu einem anderen Einsatzort verfahren zu können.

Die Vorteile der Schrottschere gemäß der Erfindung lassen sich wie folgt zusammenfassen:
- Rechtzeitige Entscheidung und Vorbereitung der Investition für eine leistungsfähige Schrottschere in Serienausführung, unabhängig von der Entscheidung über den Standort und ohne aufwendige Maschinenfundamente,
- kurze Montage- und Inbetriebnahmezeiten,
- Umsetzung der Schrottschere auf einen anderen Platz ohne großen Aufwand,
- kein Verzicht auf die Vorteile einer herkömmlichen stationären Schrottschere.

Die Erfindung wird an einem Ausführungsbeispiel näher erläutert.

### Kurze Beschreibung der Zeichnungen

In den Zeichnungen zeigen
- Fig. 1a: eine Seitenansicht der Transporteinheit mit dem Grundrahmen und dem Transportmittel,
- Fig. 1b: die Draufsicht nach Fig. 1a ohne das Transportmittel,
- Fig. 1c: eine Seitenansicht der Transporteinheit mit dem Preßbett und dem Transportmittel
- Fig. 1d: die Vorderansicht nach Fig. 1c ohne das Transportmittel,
- Fig. 2a: eine Seitenansicht der Schrottschere in Arbeitsstellung und
- Fig. 2b: eine Vorderansicht nach Fig. 2a.

### Bester Weg zur Ausführung der Erfindung

Die funktionsbereite Schrottschere besteht aus einem auf einen Grundrahmen 1 mit Federelementen 10 montierten Scherenständer 2 mit Schieberzylinder 5 und Schieberplatte 6, einem Preßbett 4 mit Seitendruckzylinder 13, einem hydraulischen Antriebsaggregat 16 mit Ölkühler 17 und Hydraulikleitungen 18 sowie einem Schaltkasten.

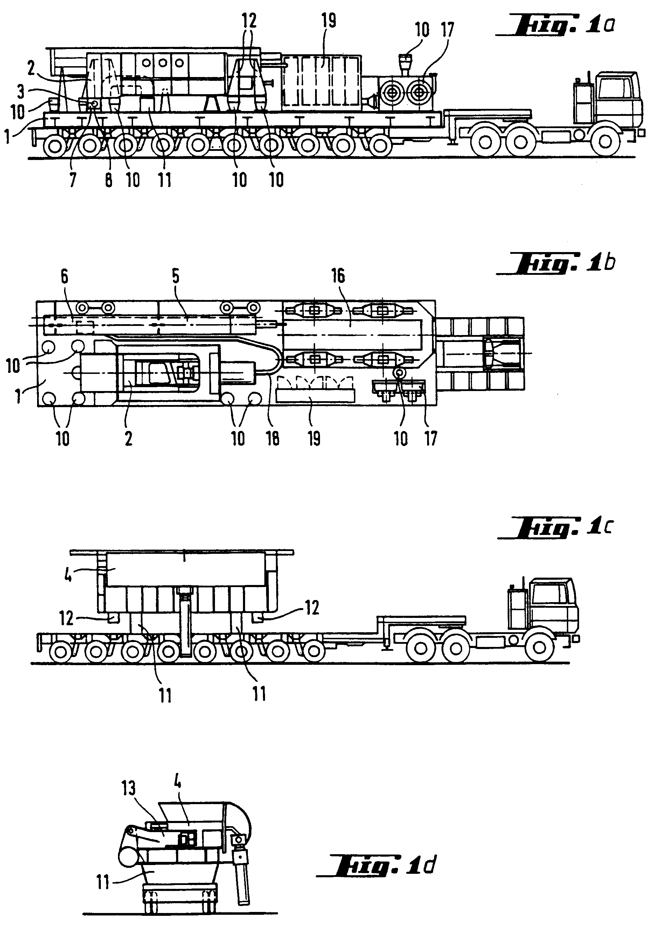

Gemäß Fig. 1a, b bildet die erfindungsgemäße Anordnung der Schrottschere eine erste Transporteinheit mit dem Grundrahmen 1 sowie den Federelementen 10 und Stützen 12 für die Aufnahme der Baugruppen Scherenständer 2 mit dem nicht bezeichnetem Messerschlitten, dem Schieberzylinder 5 und der Schieberplatte 6 sowohl im Transport- als auch Arbeitszustand sowie den festinstallierten Baugruppen, wie dem hydraulischen Antriebsaggregat 16 mit den Hydraulikleitungen 18, dem Ölkühler 17 und dem Schaltkasten 19, wobei während des Transportes einerseits der Scherenständer 2 schwenkbar über einen Drehpunkt 3 mittels einer am Scherenständer 2 vorgesehenen Schwenklagerung 7 in Verbindung mit den Federelementen 10 und Lagerbolzen 8 und andererseits der Schieberzylinder 5 mit der Schieberplatte 6 auf dem Grundrahmen 1 abgelegt sind.

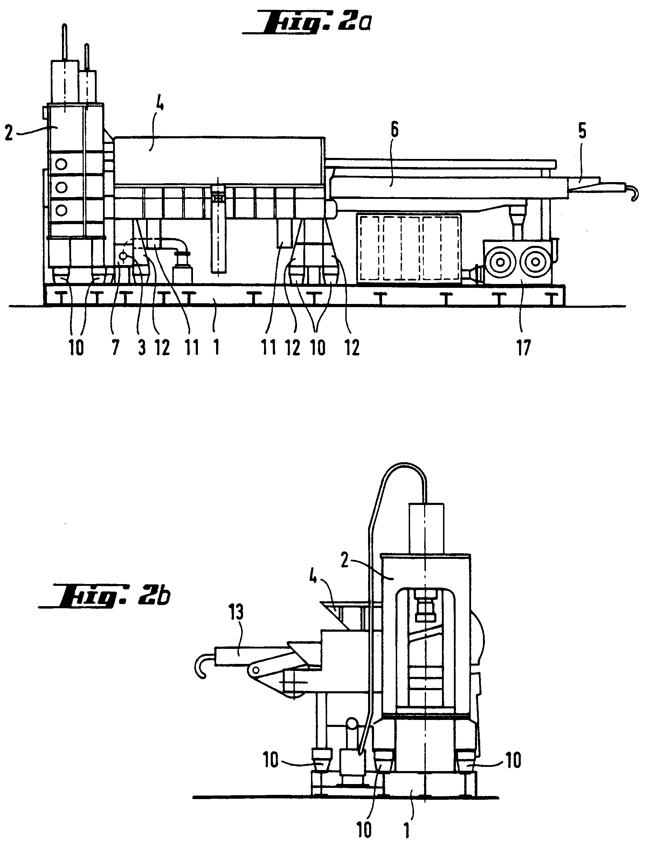

Die den Scherenständer 2 und das Preßbett 4 während des Arbeitszustandes (Fig. 2) gegenüber dem Grundrahmen 1 abstützenden Federelemente 10 sind während des Transportes durch nicht dargestellte Spannmittel festgesetzt.

Der Grundrahmen 1 besitzt fest montierte Stützen 12 für das Preßbett 4, die geteilt und zu einem Teil am Preßbett 4 angeordnet sind (Fig. 1c, 2a).

Entsprechend Fig. 1c, d ist die zweite Transporteinheit durch das (mit einer Schutzabdeckung versehene) Preßbett 4 gebildet, welches für den Transport Hilfsstützen 11 aufweist und komplett ohne Seitendruckzylinder 13 vormontiert ist.

Diese so beschriebene Anordnung mit den zwei Einheiten werden zweckmäßigerweise auf einem Plateausattelzug (als Anhängerkombination mit vorrangig 8 bis 10 Achsen) transportiert. Dabei kann es in besonderen Fällen sinnvoll sein, die erste Transporteinheit im wesentlichen auf den Grundrahmen 1 und den über den Drehpunkt 3 schwenkbar abgelegten Scherenständer 2 sowie die auf dem Grundrahmen 1 fest installierten Baugruppen, wie (ebenfalls mit einer Schutzabdeckung versehenes) hydraulisches Antriebsaggregat 16 nebst Zubehör, wie Ölkühler 17 und Hydraulikleitungen 18 zu begrenzen und den Schieberzylinder 5 mit Schieberplatte 6 separat zu transportieren. Nach dem Anspruch 10 ist es auch möglich, den Scherenständer 2 separat zu transportieren.

Für den Transport sorgen nicht dargestellte Tragseile für eine ausgewogene Lastverteilung.

Die nur zum Teil dargestellten, fest installierten Hydraulikleitungen 18 weisen adapterartige Mittel zur Entleerung, zum Verschließen und/oder zum Verbinden auf.

### Gewerbliche Anwendbarkeit

Mit dieser erfindungsgemäßen Anordnung wird rationell das Verfahren zur Montage durchführbar, wobei sich überraschend Montagezeiten von maximal zwei Tagen ergeben, wenn die erfindungsgemäßen Schritte wie folgt eingehalten werden:
- Abheben des Grundgestells 1 mit Aufbauten vom Transportmittel und Aufsetzen auf den vorbereiteten Untergrund, der vorteilhafterweise nicht als übliches Fundament vorbereitet werden muß,
- Aufrichten des Scherenständers 2 über den Drehpunkt 3 mittels der Schwenklagerung 7 auf die Federelemente 10, die noch durch die Spannmittel festgesetzt sind,
- Ziehen des Lagerbolzens 8,
- Lösen der Spannmittel der für den Transport festgesetzten Federelemente 10 des Scherenständers 2,
- Abheben und Ablegen des Schieberzylinders 5 und der Schieberplatte 6 vom Grundrahmen 1,
- Abheben des Preßbettes 4 vom Transportmittel und Aufsetzen auf die Stützen 12 sowie Herstellen der Verbindungen zwischen den geteilten Stützen 12 die zu diesem Zweck die Lage positionierende Einführungshilfen aufweisen,
- Lösen der Spannmittel der für den Transport festgesetzten Federelemente 10 des Preßbettes 4,
- Verbinden des Preßbettes 4 mit dem Scherenständer 2,
- Montieren des Messers und der Stampfertraverse,
- Heben des Schieberzylinders 5 mit Schieberplatte 6 in die Position zum Preßbett 4 und zur hinteren Stütze 12,
- Einbau des Seitendruckzylinders 13,
- Herstellen der Hydraulikanschlüsse und E-Verbindungen, wobei dieser Montageschritt dadurch unterstützt wird, daß
   ° die Endschalter an der Schieberplatte 6 bereits montiert sind,
   ° der Schaltkasten 19 mit Elektrik unverwechselbare Zentralsteckverbindungen aufweist und
   ° die Hydraulikleitungen 18, die auch der Entleerung und dem Verschließen dienenden adapterartigen Mittel besitzen,
- Einfüllen des Hydrauliköls, welches durch einen mitgeführten Tankwagen bereitgestellt ist, wobei der Bereich der Hydraulik mit einer nicht dargestellten Auffangwanne für Leckflüssigkeit unterfangen ist.

### Bezugszeichenliste

- 1: = Grundrahmen
- 2: = Scherenständer
- 3: = Drehpunkt
- 4: = Preßbett
- 5: = Schieberzylinder
- 6: = Schieberplatte
- 7: = Schwenklagerung
- 8: = Lagerbolzen
- 10: = Federelement
- 11: = Hilfsstützen
- 12: = Stützen
- 13: = Seitendruckzylinder
- 16: = hydraulisches Antriebsaggregat
- 17: = Ölkühler
- 18: = Hydraulikleitungen
- 19: = Schaltkasten

## Patentansprüche

1. Mobile Schrottschere, bestehend aus mindestens zwei vormontierten Transporteinheiten, insgesamt umfassend die Baugruppen Grundrahmen (1) mit Federelementen (10) und Stützen (12), Scherenständer (2) mit Messerschlitten, Preßbett (4) mit Schieberzylinder (5) und Schieberplatte (6), hydraulisches Antriebsaggregat (16) nebst Zubehör, wie Hydraulikleitungen (18), Ölkühler (17) und Schaltkasten (19), **dadurch gekennzeichnet**, daß eine erste Transporteinheit den Grundrahmen (1) für die Aufnahme von Baugruppen sowohl im Transport- als auch Arbeitszustand bildet, wobei während des Transportes der Scherenständer (2) schwenkbar über einen Drehpunkt (3) abgelegt ist, und die andere Transporteinheit durch das Preßbett (4) gebildet ist, welches für den Transport Hilfsstützen (11) aufweist.

2. Mobile Schrottschere nach Anspruch 1, **dadurch gekennzeichnet**, daß der Schieberzylinder (5) mit Schieberplatte (6) auf der Transporteinheit mit dem Grundrahmen (1) abgelegt sind.

3. Mobile Schrottschere nach den Ansprüchen 1 oder 2, **dadurch gekennzeichnet**, daß die weiteren Baugruppen, wie hydraulisches Antriebsaggregat (16) nebst Zubehör, wie Ölkühler (17), Hydraulikleitungen (18) und Schaltkasten (19) auf dem Grundrahmen (1) fest montiert bzw. installiert sind.

4. Mobile Schrottschere nach Anspruch 11 **gekennzeichnet durch** eine am Scherenständer (2) vorgesehene Schwenklagerung (7) in Verbindung mit dem Federelement (10) und einem Lagerbolzen (8) im Transportzustand.

5. Mobile Schrottschere nach Anspruch 1, **dadurch gekennzeichnet**, daß die Federelemente (10) während des Transportes durch Spannmittel festgesetzt sind.

6. Mobile Schrottschere nach Anspruch 1, **dadurch gekennzeichnet**, daß der Grundrahmen (1) fest montierte Stützen (12) für das Preßbett (4) aufweist.

7. Mobile Schrottschere nach Anspruch 6, **dadurch gekennzeichnet**, daß die Stützen (12) geteilt und zu einem Teil am Preßbett (4) angeordnet sind.

8. Mobile Schrottschere nach Anspruch 6 oder 7, **dadurch gekennzeichnet**, daß die Stützen (12) Einführungshilfen für die Montage aufweisen.

9. Mobile Schrottschere nach Anspruch 5 und 6, **dadurch gekennzeichnet**, daß die Federelemente (10) mittels der Stützen (12) während des Transportes festgesetzt sind.

10. Mobile Schrottschere nach Anspruch 1, **dadurch gekennzeichnet**, daß der Scherenständer (2) eine separate Transporteinheit bildet.

11. Mobile Schrottschere nach Anspruch 1, **dadurch gekennzeichnet**, daß das Preßbett (4) komplett ohne Seitendruckzylinder (13) vormontiert ist.

12. Mobile Schrottschere nach Anspruch 1, **dadurch gekennzeichnet**, daß auf die Lastverteilung abgestimmte, nicht dargestellte Tragseile vorgesehen sind.

13. Mobile Schrottschere nach Anspruch 1 und 9, **dadurch gekennzeichnet**, daß die Hydraulikleitungen (18) Mittel zur Entleerung und zum Verschließen aufweisen.

14. Verfahren zur Montage und Demontage einer mobilen Schrottschere nach Anspruch 1, **gekennzeichnet durch** folgende Schritte:
- Abheben des Grundgestells (1) mit Aufbauten vom Transportmittel und Aufsetzen auf den vorbereiteten Untergrund,
- Aufrichten des Scherenständers (2) über den Drehpunkt (3) mittels der Schwenklagerung (7) auf die Federelemente (10),
- Ziehen des Lagerbolzens (8),
- Lösen der Spannmittel der für den Transport festgesetzten Federelemente (10) des Scherenständers (2),
- Abheben und Ablegen des Schieberzylinders (5) und der Schieberplatte (6) vom Grundrahmen (1),
- Abheben des Preßbettes (4) vom Transportmittel und Aufsetzen auf die Stützen (12) sowie Herstellen der Verbindungen zwischen den geteilten Stützen (12),
- Lösen der Spannmittel der für den Transport festgesetzten Federelemente (10) des Preßbettes (4),
- Verbinden des Preßbettes (4) mit dem Scherenständer (2),
- Montieren des Messers und der Stampfertraverse,
- Heben des Schieberzylinders (5) mit Schieberplatte (6) in die Position zum Preßbett (4) und zur hinteren Stütze (12),
- Einbau des Seitendruckzylinders (13),
- Herstellen der Hydraulikanschlüsse und E-Verbindungen,
- Einfüllen des Hydrauliköls.

## Claims

1. Arrangement of a scrap shear for its transport, assembly and disassembly, consisting of at least two pre-assembled transport units, comprised overall of a base frame with spring elements and supports, shear stand with shear beam, clamping bed with sliding cylinder and sliding plate, hydraulic drive assembly plus accessories, such as hydraulic lines and oil cooler, and switch box, characterized by the fact that a transport unit forms the base frame (1) for holding assemblies both in the transport and operating mode, wherein the shear stand (2) is stowed moveably on a pivot (3) during transport, and the other transport unit is formed by the clamping bed (4), which exhibits auxiliary supports (11) for transport.

2. Arrangement according to Claim 1, characterized by the fact that the sliding cylinder (5) with sliding plate (6) is stowed on the transport unit with the base frame (1).

3. Arrangement according to Claims 1 or 2, characterized by the fact that the additional modules, such as a hydraulic drive assembly (16) plus accessories, such as an oil cooler (17), hydraulic lines (18) and switch box (19), are rigidly mounted or installed on the base frame (1).

4. Arrangement according to Claim 1, characterized by a pivot bearing (7) provided on the shear stand (2) in conjunction with the spring element (10) and a bearing bolt (8) in the transport mode.

5. Arrangement according to Claim 1, characterized by the fact that the spring elements (10) are secured via clamping means during transport.

6. Arrangement according to Claim 1, characterized by the fact that the base frame (1) has rigidly mounted supports (12) for the clamping bed (4).

7. Arrangement according to Claim 6, characterized by the fact that the supports (12) are divided, and partially situated on the clamping bed (4).

8. Arrangement according to Claim 6 or 7, characterized by the fact that the supports (12) exhibit insertion aids for assembly purposes (not shown).

9. Arrangement according to Claims 5 and 6, characterized by the fact that the spring elements (10) are secured during transport via the supports (12).

10. Arrangement according to Claim 1, characterized by the fact that the shear stand (2) forms a separate transport unit.

11. Arrangement according to Claim 1, characterized by the fact that the clamping bed (4) is completely pre-assembled without a lateral pressure cylinder (13).

12. Arrangement according to Claim 1, characterized by the fact that carrier ropes tailored to the load distribution are provided (not shown).

13. Arrangement according to Claims 1 and 9, characterized by the fact that the hydraulic lines (18) exhibit means for evacuation and sealing.

14. Procedure for assembling the arrangement according to Claim 1, characterized by the following steps:
- hoisting of the base frame (1) with built-on accessories from the transport means and placement on prepared substructure;
- mounting of the shear stand (2) via the pivot (3) by means of the pivot bearing (7) on the spring elements (10);
- tightening of the bearing bolt (8);
- loosening of the clamping means of the shear stand (2) spring elements (10) secured for transport;
- hoisting and stowing of sliding cylinder (5) and sliding plate (6) from the base frame (1);
- hoisting of the clamping bed (4) from the transport means and placement on the supports (12), along with establishment of connections between the divided supports (12);
- loosening of clamping means of the clamping bed (4) spring elements (10) secured for transport;
- connection of clamping bed (4) with the shear stand (2);
- mounting of knife and stamper traverse;
- lifting of the sliding cylinder (5) with sliding plate (6) into the position relative to the clamping bed (4) and rear support (12);
- incorporation of the lateral pressure cylinder (13);
- establishment of hydraulic hookups and electrical connections;
- filling of hydraulic oil.

## Revendications

1. Dispositif pour le transport, le montage et le démontage d'une cisaille à ferrailles, constitué d'au moins deux unités de transport pré-assemblées, comprenant, en tout, les ensembles de construction constitués d'un châssis de base avec éléments ressorts et appuis, support de cisaille avec chariot porte-couteau, banc de presse avec vérin de poussée et plaque de poussée, groupe d'entraînement hydraulique plus accessoires tels que conduites hydrauliques et refroidisseur d'huile, et coffret de commande, caractérisé en ce qu'une unité de transport forme le châssis de base (1) réceptionnant des ensembles de construction tant en situation de transport qu'en situation de travail, le support de cisaille (2) étant déposé pendant le transport en le faisant pivoter autour d'un point de rotation (3), et en ce que l'autre unité de transport est formée par le banc de presse (4) qui présente des appuis auxiliaires en vue du transport.

2. Dispositif selon la revendication 1, caractérisé en ce que le vérin de poussée (5) avec la plaque de poussée (6) sont déposés sur l'unité de transport portant le châssis de base (1).

3. Dispositif selon la revendication 1 ou 2, caractérisé en ce que les autres ensembles de construction tels que groupe d'entraînement hydraulique (16) plus accessoires tels que refroidisseur d'huile (17), conduites hydrauliques (18) et coffret de commande (19) sont montés ou installés à demeure sur le châssis de base (1).

4. Dispositif selon la revendication 1, caractérisé par un palier de pivotement (7) prévu sur le support de cisaille (2) en combinaison avec l'élément ressort (10) et un axe de palier (8) en situation de transport.

5. Dispositif selon la revendication 1, caractérisé en ce que les éléments ressorts (10) sont calés par des moyens de tension pendant le transport.

6. Dispositif selon la revendication 1, caractérisé en ce que le châssis de base (1) présente des appuis (12) montés à demeure pour le banc de presse (4).

7. Dispositif selon la revendication 6, caractérisé en ce que les appuis (12) sont divisés et disposés, pour une partie, sur le banc de presse (4).

8. Dispositif selon la revendication 6 ou 7, caractérisé en ce que les appuis (12) présentent des dispositifs d'introduction auxiliaires, non représentés, en vue du montage.

9. Dispositif selon les revendications 5 et 6, caractérisé en ce que les éléments ressorts (10) sont calés à l'aide des appuis (12) pendant le transport.

10. Dispositif selon la revendication 1, caractérisé en ce que le support de cisaille (2) constitue une unité de transport séparée.

11. Dispositif selon la revendication 1, caractérisé en ce que le banc de presse (4) est pré-assemblé à l'état complet sans vérin de compression latéral (13).

12. Dispositif selon la revendication 1, caractérisé en ce qu'on a prévu des câbles porteurs, non représentés, adaptés en vue d'une répartition de la charge.

13. Dispositif selon les revendications 1 et 9, caractérisé en ce que les conduites hydrauliques (18) présentent des moyens de vidange et d'obturation.

14. Procédé de montage du dispositif selon la revendication 1, caractérisé par les opérations suivantes:
- soulever le châssis de base (1) avec ses éléments intégrés, par rapport aux moyens de transport, et le déposer sur le sol préparé,
- redresser le support de cisaille (2) sur les éléments ressorts (10) via le point de rotation (3), au moyen du palier de pivotement (7),
- extraire l'axe de palier (8),
- desserrer les moyens de tension des éléments ressorts (10) du support de cisaille (2) calés en vue du transport,
- soulever et déposer le vérin de poussée (5) et la plaque de poussée (6) par rapport au châssis de base (1),
- soulever le banc de presse (4) des moyens de transport et le déposer sur les appuis (12), et établir la liaison entre les appuis divisés (12),
- desserrer les moyens de tension des éléments ressorts (10) du banc de presse (4) calés en vue du transport,
- raccorder le banc de presse (4) au support de cisaille (2),
- monter le couteau et la traverse du pilon,
- lever le vérin de poussée (5) avec la plaque de poussée (6) en position par rapport au banc de presse (4) et à l'appui arrière (12),
- monter le vérin de compression latéral (13),
- établir les raccords hydrauliques et les connexions électriques,
- remplir l'huile hydraulique.
